# EUROPEAN PATENT SPECIFICATION

(11) **EP 3 760 541 B1**
(45) Date of publication and mention of the grant of the patent: **20.09.2023**
(21) Application number: 20182314.3
(22) Date of filing: 25.06.2020
(51) Int. Cl.: B64D 1/22, B65H 49/00, B65H 75/44, B64C 39/02, B64D 1/12, B66D 1/12, B66D 5/02, B65H 75/42

(54) **CARGO LOADING/UNLOADING DEVICE FOR DRONES**
FRACHTLADE-/-ENTLADEVORRICHTUNG FÜR DROHNEN
DISPOSITIF DE CHARGEMENT/DÉCHARGEMENT DE CARGAISON POUR DRONES

(30) Priority: 01.07.2019 CN 201910584277
(43) Date of publication of application: 06.01.2021
(73) Proprietor: Zhang, Aaron, Los Angeles, CA 90071 (US)
(72) Inventor: Zhang, Aaron, Los Angeles, CA 90071 (US)
(74) Representative: dompatent von Kreisler Selting Werner - Partnerschaft von Patent- und Rechtsanwälten mbB

(56) References cited:
- CN-U- 206 654 621
- US-A1- 2018 244 391
- US-B1- 10 017 353

## Description

### BACKGROUND OF THE INVENTION

### 1. Field of the invention

The preferred embodiment(s) as well as examples listed in the description is related to a cargo loading/unloading device for drones and, more particularly to a loading/unloading device having a first driver to control rotation of a reel for picking up a load, a first locking element to stop movement of the reel, a second locking element to limit the movement of the reel, a second driver to linearly move the reel to allow the reel to selectively be locked by the first locking element, and a buffer providing a buffering effect to the second locking device when activated.

### 2. Description of the related art

Ever since the drone is introduced to the market, people start thinking the applications thereof. Fields such as entertainment, surveillance or transportation... etc. are various applications for drones. Furthermore, since the drone is compact in size, lightweight, easy maneuverability and ecofriendly, more and more attentions are focused on how to make the drone even more durable and reliable for a prolonged period of time.

Generally speaking, when the drone is used in transportation, an electric reel is used to control the cable to load/unload the cargo. When reaching the designated area, the electric reel onboard the drone releases the cable to unload the cargo or rewind the cable to load the cargo. This load/unload mechanism purely depends on the functioning of the electric reel, which consumes large amount of electricity and relies on the operation of the electric reel considerably. That is, once the electric reel is malfunctioned due to power failure, mechanical problems or other factors, the drone is then unable to fulfill the designated task.

Further, landing of the drone in a populated area where buildings are densely situated is a great risk for the drone might easily have scratches or be destroyed by the protruding parts of the buildings. Since landing causes great risks to the drone, using cables to load and unload the cargo seems a great choice in the metropolitan area if the designated recipient is in good faith. That is, when the cable is unwound from the electric reel to unload the cargo, bystanders or passersby may deliberately pull the cable trying to play with the drone and inevitably damaging the drone. CN 206 654 621 U discloses a goods winding and unwinding device for unmanned aerial vehicle, cover including wire -rewinding machine. US 2018/244391 A1 describes a method for an airborne payload system includes receiving, from a sensor on a payload line, information about the payload line, wherein the payload line comprises a first end wound about a main reel of a winch system and a second end configured to couple to a payload. The method further includes providing instructions, based on the received information, to the unmanned aircraft and the winch system in order to control a position of the second end of the payload line. US 10 017 353 B1 discloses an electrical cable reel module for a drone which includes a bracket adapted to be firmly fixed to the drone. A reel body is movably and rotatably mounted on the bracket.

### SUMMARY OF THE INVENTION

The current invention provides a drone loading/unloading device with the features of independent claim 1. Further preferred features of the current invention are defined in the dependent claims. The primary objective of the preferred embodiment of the present invention is to provide a drone cargo loading/unloading device to safely protect the drone.

Still another objective of the preferred embodiment of the present invention is that the first locking element and the second locking element are respectively two pairs of gears interlocking together when needed. It is also noted that the gears of each pair of gears are slanted.

A still further objective of the preferred embodiment of the present invention is that the electric reel has a first rotation axle securely and axially received inside the electric reel and having a first end extending out therefrom to selectively contact the first driver and a second end securely connected to the buffer and a second rotation axle one end of which is securely connected to the buffer and the other end of which is connected to a linking rod rotatably extending out from the second driver to allow the second driver to move the electric reel linearly.

### BRIEF DESCRIPTION OF THE DRAWINGS

Fig. 1 is a schematic side view showing the cargo loading/unloading device for a drone in a first status of the preferred embodiment of the invention;
Fig. 2 is a side plan view of the cargo loading/unloading device for a drone of the preferred embodiment of the present invention;
Fig. 3 is a cross sectional view of the cargo loading/unloading device for a drone by line A-A in Fig. 2;
Fig. 4 is a schematic view showing that the cargo loading/unloading device for a drone in a second status;
Fig. 5 is a cross sectional view of the cargo loading/unloading device for a drone of the preferred embodiment of the present invention in the second status;
Fig. 6 is a schematic view showing that the cargo loading/unloading device for a drone of the preferred embodiment of the present invention in a third status;
Fig. 7 is a cross sectional view showing that the cargo loading/unloading device for a drone of the preferred embodiment of the present invention in a third status;
Fig. 8 is an exploded perspective view showing the connection between a first rotation axle and a second rotation axle;
Fig. 9 is an exploded side plan view showing the connection between the first rotation axle and the second rotation axle; and
Fig. 10 is a schematic side plan view showing alternative choice for the buffer of the preferred embodiment of the present invention.

### DETAILED DESCRIPTION OF THE PREFERRED EMBODIMENT

Embodiments, or examples, of the disclosure illustrated in the drawings are now described using specific language. It shall be understood that no limitation of the scope of the disclosure is hereby intended. Any alteration or modification of the described embodiments, and any further applications of principles described in this document, are to be considered as normally occurring to one of ordinary skill in the art to which the disclosure relates. Reference numerals may be repeated throughout the embodiments, but this does not necessarily mean that feature(s) of one embodiment apply to another embodiment, even if they share the same reference numeral.

It shall be understood that, although the terms first, second, third, etc. may be used herein to describe various elements, components, regions, layers or sections, these elements, components, regions, layers or sections are not limited by these terms. Rather, these terms are merely used to distinguish one element, component, region, layer or section from another region, layer or section. Thus, a first element, component, region, layer or section discussed below could be termed a second element, component, region, layer or section without departing from the teachings of the present inventive concept.

The terminology used herein is for the purpose of describing particular example embodiments only and is not intended to be limited to the present inventive concept. As used herein, the singular forms "a," "an" and "the" are intended to include the plural forms as well, unless the context clearly indicates otherwise. It shall be further understood that the terms "comprises" and "comprising," when used in this specification, point out the presence of stated features, integers, steps, operations, elements, or components, but do not preclude the presence or addition of one or more other features, integers, steps, operations, elements, components, or groups thereof.

The following description describes a preferred embodiment of a cargo loading/unloading device for a drone, in which the device has a buffer installed between the first rotation axle and a second rotation axle to providing a buffering effect to the second locking element to protect the second locking element from damage.

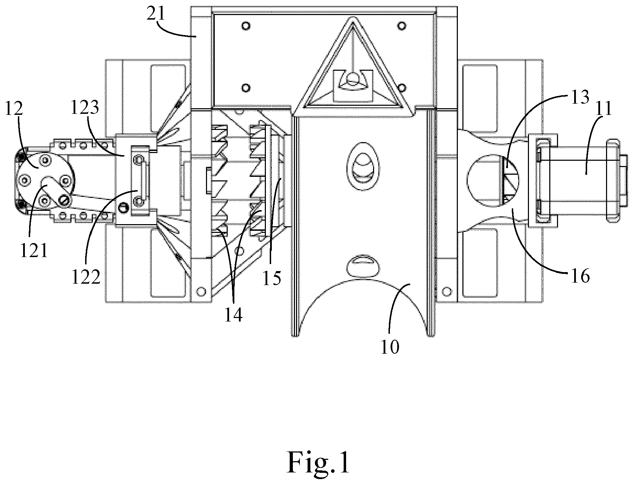

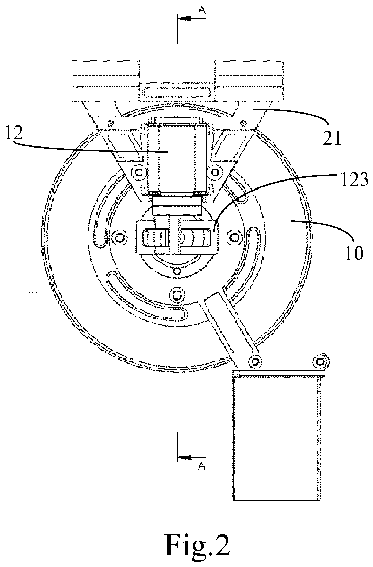

With reference to Figs. 1, 2 and 3, the preferred embodiment of the present invention provides a cargo loading/unloading device for a drone having an electric reel 10, a first driver 11, e.g. motor, selectively connected to the electric reel 10 to rotate the electric reel 10 only in one direction, a second driver 12, e.g. motor, selectively connected to the electric reel 10 to linearly move the electric reel 10, a first locking element 13 mounted between the first driver 11 and the electric reel 10 to lock the first driver and the electric reel 10 to allow the first driver 11 to rotate the electric reel 10 and a second locking element 14 mounted between the electric reel 10 and the second driver 12 to allow the second driver 12 to linearly move the electric reel 10.

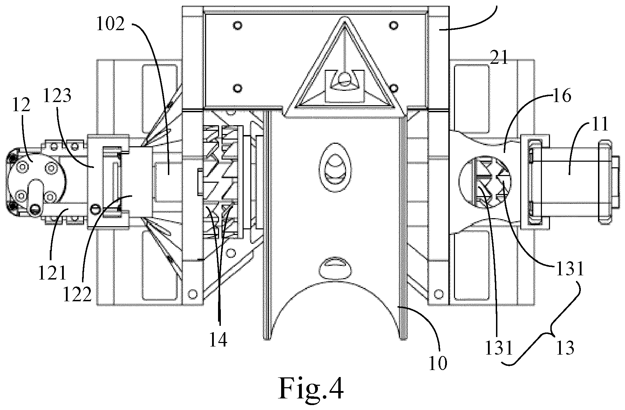

From the drawings described above, it is appreciated the first driver 11 may be a general driver and the electrical reel 10 has a first rotation axle 101 axially and securely received in the electric reel 10. The first rotation axle 101 has a first end integrally extending out of the electric reel 10 and provided with a portion of the first locking element 13. That is, the first locking element 13 has two sets of gears 131 (as shown in Fig. 4) one of which is integrally formed on the first end of the first rotation axle 101 and the other half of which is integrally formed on a side of the first driver 11. Both gears are slanted in a predetermined angle such that when the two halves of gears are matched with one another, none of which are damaged. When the two sets of gears 131 are matched with one another, the first driver 11 is able to drive the electric reel 10 to rotate in only one direction. A protection sleeve 16 is provided on the outside of the first locking element 13 and has a tapered guiding passage 161 defined inside the protection sleeve 16 to guide the matching of the two sets of gears 131. A second rotation axle 102 is provided and has a first end connected to the first rotation axle 101 and a second end connected to a linking rod 121 extending out from the second driver 12. In order to secure the connection and the rotation between the first rotation axle 101 and the second rotation axle 102, a stability bracket 21 is provided and has two oppositely defined holes (not numbered) respectively formed in two opposed side walls of the stability bracket 21 to allow the first rotation axle 101 and the second rotation axle 102 to extend there through and to provide support thereto. It is noted that a distance between the two opposed side walls of the stability bracket 21 is larger than that of the axial length of the electric reel 10 so that the electric reel 10 has sufficient space for linear movement when required.

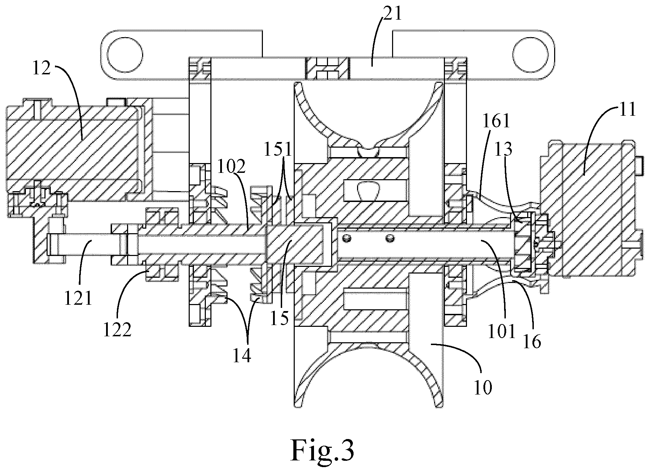

With reference to Figs. 1 and 3, it is appreciated that when the electric reel 10 is wound with a cable and there is nothing to stop the electric reel 10 from free rotation due to gravity, the free rotation direction of the electric reel 10 is opposite to the direction of the electric reel 10 when driven by the first driver 11. That is, the first driver 11 only drives the electric reel 10 to retrieve the cable after being released. With this design, the first driver 11 only functions when the cable is to be retrieved and the battery onboard the drone is saved for prolonged flight. Also, when the first locking element 13 is energized to lock the electric reel 10 with the first driver 11, the first driver 11 is able to drive the electric reel 10 to start retrieving the cable and when the first locking element 13 is de-energized, the electric reel 10, no longer connected to the first driver 11, stops rotation and cable retrieving process is stopped.

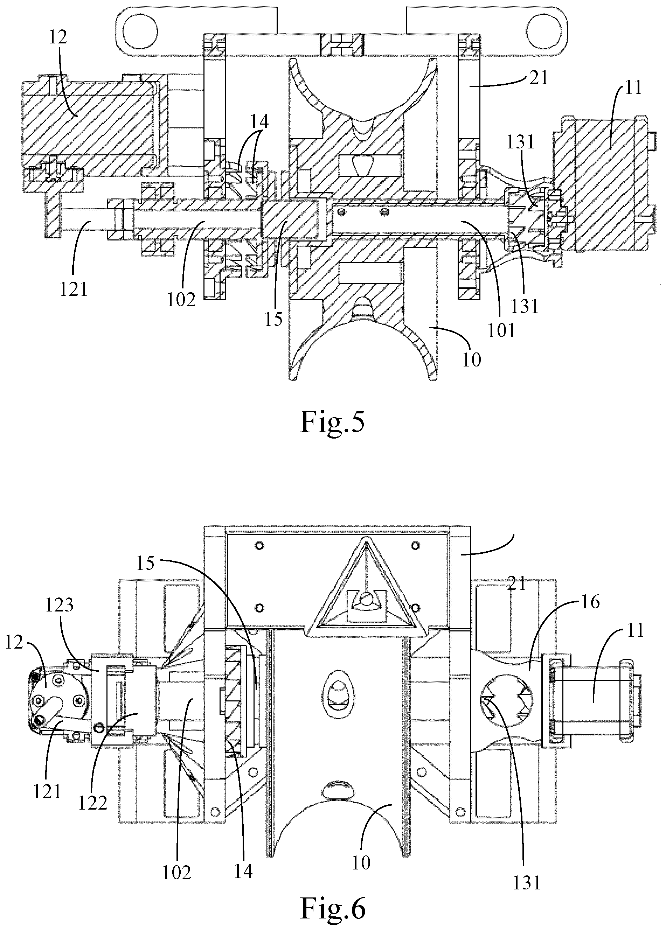

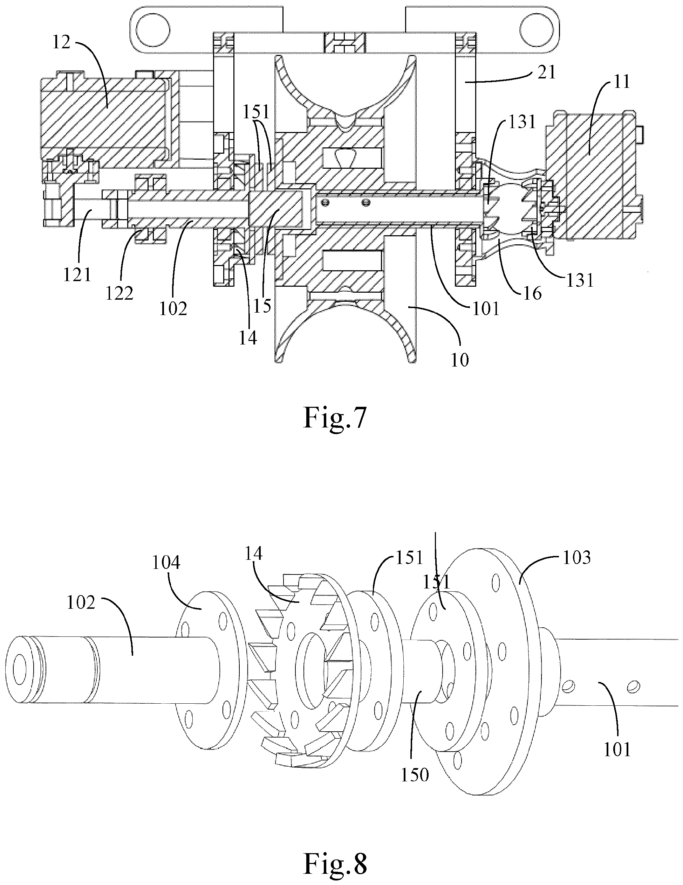

With reference to Figs. 6 and 7, it is noted that the second locking element 14 is, similarly, formed by two sets of slanted gears. Both gears are slanted in a predetermined angle such that when the two halves of gears are matched with one another, none of which are damaged. When the two sets of gears of the second locking element 14 are matched with one another, the free rotation of the electric reel 10 is terminated.

From the depiction of Figs. 1-7, it is noted that the second driver 12 is securely connected to a linking rod 121 composed of two rotatably interconnected rods one of which is connected to a vertically downward driver shaft of the second driver 12 and the other one is rotatably connected to a C-shaped bearing mount 123 having a set of bearings 122 mounted therein as shown in Fig. 1. It is noted that a distal end of the second rotation axle 102 is connected to the bearing mount 123 such that when the second driver 12 is activated, the rotation of the linking rod 121 is able to drive the second rotation axle 102 to move linearly. That is, the movement of the linking rod 121 pushes or pulls the second rotation axle 102 to move.

With reference to Figs. 3, 4, 5, 6 and 7, it is noted that when the second driver 12 is activated, the second rotation axle 102 is moved linearly and because the second rotation axle 102 is connected to the first rotation axle 101, movement of the second rotation axle 102 drives the first rotation axle 101 to move as well. Again, as the two sets of gears 131 of the first locking element 13 are respectively mounted on the first driver 11 and the distal end of the first rotation axle 101, the linear movement of the first rotation axle 101 activate/deactivate the locking effect of the first locking element 13, which allows the first driver 11 to selectively drive the first rotation axle 101 to rotate. Also, as the two sets of gears (not numbered) of the second locking element 14 are respectively mounted on the second rotation axle 102 and the side wall of the stability bracket 21, the linear movement of the second rotation axle 102 activate/deactivate the locking effect of the second locking element 14, which allows the second driver 12 to selectively drive the second rotation axle 102 to move. In the meantime, when the first and second rotation axles 101, 102 are both driven by the second driver 12 to move to a position where neither the first locking element 13 nor the second locking element 14 are activated, the first rotation axle 101 as well as the second rotation axle 102 is able to rotate freely. It is appreciated that when the first rotation axle 101 is able to rotate freely due to the weight of the cable wound around the electric reel 10, the cargo is being dropped to the designated location. Therefore, it is shown in Figs. 1 and 3 that when the first locking element 13 is in a locked status due to the drive from the second driver 12 to the second rotation axle 102 and the first rotation axle 101 (the second locking element is disengaged), the first driver 11 is able to drive the first rotation axle 101 to rotate. As the first rotation axle 101 is securely connected to the electric reel 10 and the two sets of gears 131 are securely connected to one another, rotation of the electric reel 10 commences a cable retrieving process. If neither the first locking element 13 nor the second locking element 14 is energized, the electric reel 10 starts a cable releasing process. When the second rotation axle 102 is pulled backward by the second driver 12 to allow the two sets of gears of the second locking element 14 to engage with one another, the electric reel 10 stops cable releasing process. Also, it is to be noted that at the time when the second locking element 14 is energized, it is the time that the electric reel 10 is releasing the cable (not shown) so that when the second locking element 14 is energized, the impact when the two sets of gears of the second locking element 14 are interconnected is huge and may damage the teeth of the gears after a period of time.

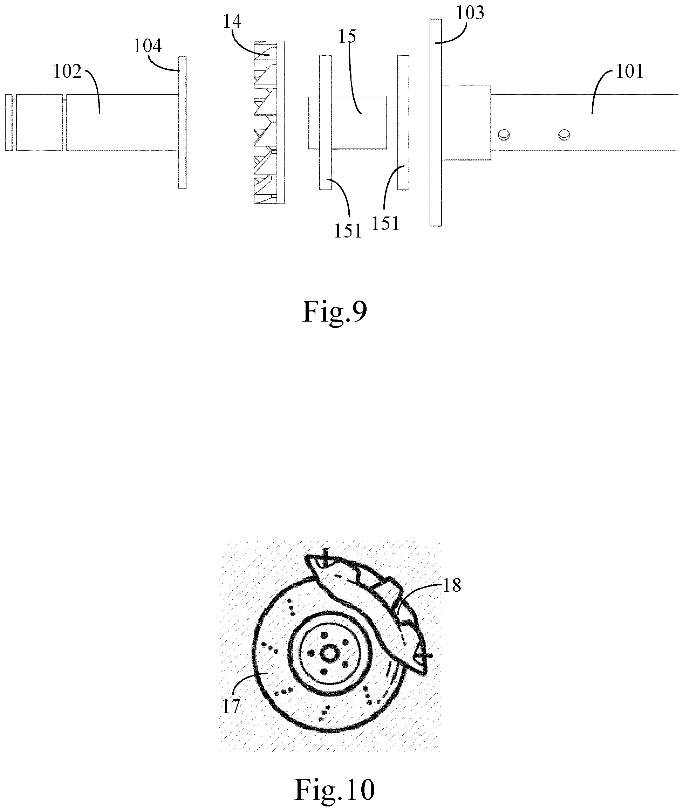

To avoid the damage to the teeth of the two sets of gears of the second locking element 14, a buffer 15 is provided as shown in Figs. 8 and 9. The buffer 15 has a first disk 103 formed on a distal end of the first rotation axle 101, two connection disks 151 firmly and respectively provided on a side of the first disk 103 and a side of one set of the gear of the second locking element 14, a bar 150 formed between the two connection disks 151 and a second disk 104 firmly formed on a distal end of the second rotation axle 102 to be surrounded by the teeth of the one set of gear of the second locking element 14. After the connection disks 151 are firmly and respectively engaged with the first disk 103 and the second disk 104, the rigid connection among the elements mentioned above ensures that the rotation of the first rotation axle 101 drives the second rotation axle 102 to rotate and vice versa. The buffer 15 used in the preferred embodiment is a damper to provide a torque absorption by the bar 150 so that when the second locking element 14 is energized, i.e., the two sets of gears of the second locking element 14 are engaged with one another, the torque absorption effect by the buffer 15 provides a clearance for the two sets of gears of the second locking element 14 to prevent any damage to the gears of the second locking element 14.

With reference to Fig. 10, the buffer 15 may adopt another mechanism to achieve the same effect. The buffer 15 in this preferred embodiment includes a brake disc 17 mounted on either the first rotation axle 101 or the second rotation axle 102 and a brake shoe 18 mounted on the side wall of the stability bracket 21. When the second driver 12 is energized to pull or push (depending on the design choice) the second rotation axle 102 to engage the second locking element 14, the brake shoe 18 engages the brake disc 17 to provide a buffer effect to the second locking element 14 when the two sets of gears are engaged with one another. Other buffer embodiment may be adopted to slow down the rotation of the second rotation axle 102, such as an electromagnetic driver directly mounted on either the first rotation axle 101 or the second rotation axle 102. It is noted that the bar 150 may be made of a metal, plastic, rubber of any suitable material or may be made of a spring, so long as the bar 150 is able to provide a buffer to the second locking element 14. It is also noted that the buffer may be a combination of an electromagnetic buffer having an axle selectively connected to either the first rotation axle or the second axle so that when the buffering effect is required, the electromagnetic force is delivered to stop rotation of the reel. The buffer may also be a spring to absorb the rotation force from the reel when required. Another embodiment to reduce damage to the cargo is to add a parachute to the cargo so that when the cargo (payload of the drone or a flying object) is descending, the parachute may dramatically reduce the descending speed and prevent the cargo from damage of any kind. Another method of protecting the cargo from damage is to use shock absorbing material having elasticity such as rubber situated between the driver, the motor, and the rotation axel to absorb the impact when the rotation axel is linearly moved or the shock absorbing material is used to package the content of the cargo so that when the cargo hits the ground the content of the cargo is protected.
Operational procedure of the preferred embodiment of the present invention is provided as follows.

With reference to Figs. 1-3, when rewind of the cable is necessary, the second driver 14 is energized to push the second rotation axle 102 as well as the first rotation axle 101 to engage the two sets of gears of the first locking element 13. After the two sets of gears of the first locking element 13 are engaged with one another, the first driver 11 is energized to drive the first rotation axle 101 to start rewinding of the cable.

With reference to Figs. 4 and 5, when releasing the cable is necessary, the second driver 12 is energized to drive the second rotation axle 102 as well as the first rotation axle 101 to disengage the two sets of gears of the first locking element 13. Also, the second locking element 14 is not engaged. At this time, since both the first locking element 13 and the second locking element 14 are not engaged, the electric reel 10 is able to rotate freely. As the cargo is attached to the cable, due to gravity effect, the cable is released to unload the cargo.

With reference to Figs. 6 and 7, after the cargo is reached to the ground or the cable is released enough, the second driver 14 is energized to pull (or push depending on the design choice) the second rotation axle 102 to engage the two sets of gears of the second locking element 14. Meanwhile, the buffer 15 starts functioning to provide a buffering effect to the second locking element 14 to prevent damage to the two sets of gears of the second locking element 14.

In sum, it is noted that when the first driver 11 is functioning and the first locking element 13 is engaged, the electric reel 10 starts rewinding the cable. When both the first locking element 13 and the second locking element 14 are not engaged, the electric reel 10 is able to rotate free to release the cable (the cargo). However, when the second locking element 14 starts the engagement to terminate the cable releasing process, the buffer 15 provides a torque absorption effect to the rotation of the second rotation axle 102 to prevent damage to the teeth of the second locking element 14.

Furthermore, it is appreciated from the design of the preferred embodiment of the present invention that the drone cargo loading/unloading device is able to achieve the following effects:

### Safety

Due to the existence of the buffer, any undesignated pull to the cable may still not be prevented, but the mechanism of the device of the preferred embodiment of the present invention is protected.

### Reduced Noise

The higher the drone is, the less noise the drone creates to the people on the ground.

Although the disclosure has been described in connection with the embodiments shown in the accompanying drawings, a person having ordinary skill in the art can make various modifications to the disclosure based on the above descriptions. Therefore, some details of the embodiment should not be construed to restrict the disclosure. The scope of the disclosure is limited by the accompanying claims.

## Claims

1. A drone loading/unloading device comprising:
an electric reel (10) selectively movable for releasing/winding a cable adapted to be wound around the electric reel (10); a first rotation axle (101) extending through the electric reel (10),
a first driver (11) operably connected to the first rotation axle (101) to selectively drive the first rotation axle (101) as well as the electric reel (10) to rotate and a first locking element (13) mounted between the electric reel (10) and the first driver (11) to prevent the electric reel (10) from free rotation when the electric reel is at a first locked position;
a second driver (12) operably connected to the electric reel (10) to selectively drive the electric reel (10) to reciprocally and linearly move from the first locked position, an unlocked position and a second locked position;
a second locking element (14) locking the electric reel (10) in the second locked position to disengage the electric reel (10) from a the free-rotation status and
a buffer (15) mounted between the second driver (12) and the electric reel (10) to provide buffering effect to the electric reel (10) and the second locking element (14) when the electric reel (10) is moved from the unlocked position to the second locked position, wherein the electric reel (10) is movably positioned between the first locked position where the first driver (11) drives the electric reel (10) to rotate the cable, and the unlocked position where the electric reel (10) is disengaged with the first driver (11) to allow the electric reel (10) to rotate freely so as to release the cable.

2. The device as claimed in claim 1, wherein a sleeve (16) is provided to surround the first locking element (13) and has a guiding passage (161) defined therein to guide engagement between two halves of teeth of the first locking element (13).

3. The device as claimed in claim 1 further comprising a second rotation axle (102) operably connected to the first driver (11) and the first rotation axle (101) via the buffer (15).

4. The device as claimed in claim 3 further comprising a stability bracket (21) mounted on the first rotation axle (101) and the second rotation axle (102) to provide stability to the rotation of both the first rotation axle (101) and the second rotation axle (102).

5. The device as claimed in claim 4, wherein the second locking element (14) is composed of two sets of gears respectively mounted on the second rotation axle (102) and a side of the stability bracket (21) so that when the second rotation axle (102) as well as the first rotation axle (101) is moved from the unlocked position to the second third locked position, engagement impact between the two sets of gears of the second locking element (14) is reduced by the buffer (15).

6. The device as claimed in claim 1, wherein the first locking element (13) is composed of two sets of gears selectively engaged with one another by the second driver (12) and the two sets of gears are respectively mounted on a side of the first driver (11) and a free end of the first rotation axle (101).

7. The device as claimed in claim 5, wherein the first locking element (13) is composed of two sets of gears selectively engaged with one another by the second driver (12) and the two sets of gears are respectively mounted on a side of the first driver (11) and a free end of the first rotation axle (101).

8. The device as claimed in claim 5, wherein the seond driver (12) moves the second rotation axle (102) as well as the first rotation axle (101) to selectively engage the two sets of gears of the first locking element (13) to start rotation of the electric reel (10) for cable retrieving when the electric reel (10) is at the first locked position.

9. The device as claimed in claim 4, wherein the second driver (12) moves the first rotation axle (101) as well as the second rotation axle (102) to selectively engage one another the two sets of gears of the second locking element (14) to stop free rotation of the electric reel (10) when the electric reel (10) is at the third locked position.

10. The device as claimed in claim 7, wherein the first locked position and the second locked position of the electric reel (10) is selected between the two sets of gears of the first locking element (13) and the two sets of gears of the second locking element (14).

11. The device as claimed in claim 5, wherein teeth of the two sets of gears of the first locking element (13) and of the two sets of gear of the second locking element (14) are slanted such that when the two sets of gears of the first locking element (13) and of the second locking element (14) are engaged with one another, damage to the teeth is minimized.

12. The device as claimed in claim 1 wherein the buffer (15) is selected from a group consisting of an electromagnetic buffer, a rubber and a spring.

## Patentansprüche

1. Drohnenlade-/-entladevorrichtung, umfassend:
eine elektrische Haspel (10), die selektiv bewegt werden kann, um ein Kabel freizugeben/zu wickeln, das zum Wickeln um die elektrische Haspel (10) geeignet ist; eine erste Rotationsachse (101), die sich durch die elektrische Haspel (10) hindurch erstreckt,
einen ersten Antrieb (11), der mit der ersten Rotationsachse (101) wirkverbunden ist, um selektiv die erste Rotationsachse (101) und die elektrische Haspel (10) zum Drehen anzutreiben, und ein erstes Verriegelungselement (13), das zwischen der elektrischen Haspel (10) und dem ersten Antrieb (11) angeordnet ist, um zu verhindern, dass sich die elektrische Haspel (10) frei dreht, wenn sich die elektrische Haspel in einer ersten Verriegelungsposition befindet,
einen zweiten Antrieb (12), der mit der elektrischen Haspel (10) verbunden ist, um die elektrische Haspel (10) selektiv zum Bewegen linear hin und her von der ersten Verriegelungsposition, einer Entriegelungsposition und einer zweiten Verriegelungsposition anzutreiben;
ein zweites Verriegelungselement (14), das die elektrische Haspel (10) in der zweiten Verriegelungsposition verriegelt, um die elektrische Haspel (10) aus dem freien Drehzustand zu entfernen, und
einen Stoßdämpfer (15), der zwischen dem zweiten Antrieb (12) und der elektrischen Haspel (10) angebracht ist, um der elektrischen Haspel (10) und dem zweiten Verriegelungselement (14) eine Dämpfwirkung bereitzustellen, wenn sich die elektrische Haspel (10) von der Entriegelungsposition in die zweite Verriegelungsposition bewegt,
wobei die elektrische Haspel (10) beweglich zwischen der ersten Verriegelungsposition, in der der erste Antrieb (11) die elektrische Haspel (10) antreibt, um das Kabel zu drehen, und der Entriegelungsposition, in der die elektrische Haspel (10) von dem ersten Antrieb (11) abgekoppelt ist, um zu ermöglichen, dass sich die elektrische Haspel (10) frei dreht und somit das Kabel freizugeben positioniert ist.

2. Vorrichtung nach Anspruch 1, wobei eine Hülse (16) vorgesehen ist, um das erste Verriegelungselement (13) zu umgeben, und einen darin definierten Führungskanal (161) aufweist, um den Eingriff zwischen den beiden Zahnhälften des ersten Verriegelungselements (13) zu führen.

3. Vorrichtung nach Anspruch 1, umfassend ferner eine zweite Rotationsachse (102), die über den Stoßdämpfer (15) mit dem ersten Antrieb (11) und der ersten Rotationsachse (101) wirkverbunden ist.

4. Vorrichtung nach Anspruch 3, umfassend ferner eine Stabilitätshalterung (21), die an der ersten Rotationsachse (101) und der zweiten Rotationsachse (102) angebracht ist, um eine Stabilität für die Rotation sowohl der ersten Rotationsachse (101) als auch der zweiten Rotationsachse (102) bereitzustellen.

5. Vorrichtung nach Anspruch 4, wobei das zweite Verriegelungselement (14) aus zwei Sätzen von Zahnrädern besteht, die jeweils an der zweiten Rotationsachse (102) bzw. auf einer Seite der Stabilitätshalterung (21) angebracht sind, so dass der Eingriffsstoß zwischen den zwei Sätzen von Zahnrädern des zweiten Verriegelungselements (14) durch den Stoßdämpfer (15) verringert wird, wenn sich die zweite Rotationsachse (102) und die erste Rotationsachse (101) von der Entriegelungsposition in die zweite Verriegelungsposition bewegen.

6. Vorrichtung nach Anspruch 1, wobei das erste Verriegelungselement (13) aus zwei Sätzen von Zahnrädern besteht, die wahlweise über den zweiten Antrieb (12) miteinander in Eingriff stehen, wobei die beiden Sätze von Zahnrädern jeweils auf einer Seite des ersten Antriebs (11) bzw. am freien Ende der ersten Rotationsachse (101) angebracht sind.

7. Vorrichtung nach Anspruch 5, wobei das erste Verriegelungselement (13) aus zwei Sätzen von Zahnrädern besteht, die wahlweise über den zweiten Antrieb (12) miteinander in Eingriff stehen, wobei die beiden Sätze von Zahnrädern jeweils auf einer Seite des ersten Antriebs (11) bzw. am freien Ende der ersten Rotationsachse (101) angebracht sind.

8. Vorrichtung nach Anspruch 5, wobei, wenn sich die elektrische Haspel (10) in der ersten Verriegelungsposition befindet, der zweite Antrieb (12) die zweite Rotationsachse (102) und die erste Rotationsachse (101) bewegt, um selektiv die zwei Sätze von Zahnrädern des ersten Verriegelungselements (13) in Eingriff zu bringen, wodurch die Rotation der elektrischen Haspel (10) zum Zurückziehen des Kabels eingeleitet wird.

9. Vorrichtung nach Anspruch 4, wobei, wenn sich die elektrische Haspel (10) in der dritten Verriegelungsposition befindet, der zweite Antrieb (12) die erste Rotationsachse (101) und die zweite Rotationsachse (102) bewegt, um die zwei Sätze von Zahnrädern des zweiten Verriegelungselements (14) selektiv miteinander in Eingriff zu bringen, wodurch die freie Rotation der elektrischen Haspel (10) gestoppt wird.

10. Vorrichtung nach Anspruch 7, wobei die erste Verriegelungsposition und die zweite Verriegelungsposition der elektrischen Haspel (10) zwischen den zwei Sätzen von Zahnrädern des ersten Verriegelungselements (13) und zwei Sätzen von Zahnrädern des zweiten Verriegelungselements (14) ausgewählt sind.

11. Vorrichtung nach Anspruch 5, wobei die Zähne der beiden Sätze von Zahnrädern des ersten Verriegelungselements (13) und der beiden Sätze von Zahnrädern des zweiten Verriegelungselements (14) so geneigt sind, dass eine Beschädigung der Zähne minimiert wird, wenn die beiden Sätze von Zahnrädern des ersten Verriegelungselements (13) und die beiden Sätze von Zahnrädern des zweiten Verriegelungselements (14) miteinander in Eingriff stehen.

12. Vorrichtung nach Anspruch 1, wobei der Stoßdämpfer (15) ausgewählt ist aus einer Gruppe aus einem elektromagnetischen Stoßdämpfer, einem Gummi und einer Feder.

## Revendications

1. Dispositif de chargement/déchargement pour un drone, comprenant :
une bobine électrique (10) mobile sélectivement pour dérouler /enrouler un câble adapté à être enroulé autour de la bobine électrique (10) ; un premier arbre rotatif (101) s'étendant à travers la bobine électrique (10),
un premier entraîneur (11) relié de manière opérationnelle au premier arbre rotatif (101) pour entraîner sélectivement le premier arbre rotatif (101) et la bobine électrique (10) à tourner et un premier élément de verrouillage (13) monté entre la bobine électrique (10) et le premier entraîneur (11) pour empêcher la bobine électrique (10) de tourner librement lorsque la bobine électrique se trouve dans une première position de verrouillage ;
un deuxième entraîneur (12) relié de manière opérationnelle à la bobine électrique (10) pour entraîner sélectivement la bobine électrique (10) à se déplacer de manière alternative et linéaire à partir de la première position de verrouillage, d'une position de déverrouillage et d'une deuxième position de verrouillage ;
un deuxième élément de verrouillage (14) verrouillant la bobine électrique (10) dans la deuxième position de verrouillage pour dégager la bobine électrique (10) d'un état de rotation libre et un tampon (15) monté entre le deuxième entraîneur (12) et la bobine électrique (10) afin de fournir un effet tampon à la bobine électrique (10) et au deuxième élément de verrouillage (14) lorsque la bobine électrique (10) se déplace de la position de déverrouillage à la deuxième position de verrouillage,
dans lequel la bobine électrique (10) est positionné de manière mobile entre la première position de verrouillage dans laquelle le premier entraîneur (11) entraîne la bobine électrique (10) à faire tourner le câble et la position de déverrouillage dans laquelle la bobine électrique (10) est dégagée du premier entraîneur (11) pour permettre à la bobine électrique (10) de tourner librement afin de libérer le câble.

2. Dispositif selon la revendication 1, dans lequel un manchon (16) est prévu pour entourer le premier élément de verrouillage (13) et comporte un passage de guidage (161) délimité dans celui-ci pour guider un engagement entre deux moitiés de dents du premier élément de verrouillage (13).

3. Dispositif selon la revendication 1, comprenant en outre un deuxième arbre rotatif (102) relié de manière opérationnelle au premier entraîneur (11) et au premier arbre rotatif (101) par l'intermédiaire du tampon (15).

4. Dispositif selon la revendication 3, comprenant en outre un support de stabilité (21) monté sur le premier arbre rotatif (101) et sur le deuxième arbre rotatif (102) pour assurer une stabilité de la rotation du premier arbre rotatif (101) et du deuxième arbre rotatif (102).

5. Dispositif selon la revendication 4, dans lequel le deuxième élément de verrouillage (14) est composé de deux jeux d'engrenages montés respectivement sur le deuxième arbre rotatif (102) et sur un côté du support de stabilité (21) de sorte que, lorsque le deuxième arbre rotatif (102) et le premier arbre rotatif (101) se déplacent de la position de déverrouillage à la deuxième position de verrouillage, un impact d'engagement entre les deux jeux d'engrenages du deuxième élément de verrouillage (14) soit réduit grâce au tampon (15).

6. Dispositif selon la revendication 1, dans lequel le premier élément de verrouillage (13) est composé de deux jeux d'engrenages engagés sélectivement l'un avec l'autre par le deuxième entraîneur (12) et les deux jeux d'engrenages sont respectivement montés sur un côté du premier entraîneur (11) et sur une extrémité libre du premier arbre rotatif (101).

7. Dispositif selon la revendication 5, dans lequel le premier élément de verrouillage (13) est composé de deux jeux d'engrenages engagés sélectivement l'un avec l'autre par le deuxième entraîneur (12) et les deux jeux d'engrenages sont respectivement montés sur un côté du premier entraîneur (11) et sur une extrémité libre du premier arbre rotatif (101).

8. Dispositif selon la revendication 5, dans lequel le deuxième entraîneur (12) entraîne le deuxième arbre rotatif (102) et le premier arbre rotatif (101) à se déplacer pour engager sélectivement les deux jeux d'engrenages du premier élément de verrouillage (13) pour démarrer la rotation de la bobine électrique (10) pour récupérer le câble lorsque la bobine électrique (10) se trouve dans la première position de verrouillage.

9. Dispositif selon la revendication 4, dans lequel le deuxième entraîneur (12) entraîne le premier arbre rotatif (101) et le deuxième arbre rotatif (102) à se déplacer pour engager sélectivement les deux jeux d'engrenages du deuxième élément de verrouillage (14) pour arrêter la rotation libre de la bobine électrique (10) lorsque la bobine électrique (10) se trouve dans la troisième position de verrouillage.

10. Dispositif selon la revendication 7, dans lequel la première position de verrouillage et la deuxième position de verrouillage de la bobine électrique (10) sont choisies parmi les deux jeux d'engrenages du premier élément de verrouillage (13) et les deux jeux d'engrenages du deuxième élément de verrouillage (14).

11. Dispositif selon la revendication 5, dans lequel les dents des deux jeux d'engrenages du premier élément de verrouillage (13) et des deux jeux d'engrenages du deuxième élément de verrouillage (14) sont inclinés de sorte que, lorsque les deux jeux d'engrenages du premier élément de verrouillage (13) et du deuxième élément de verrouillage (14) sont engagés l'un avec l'autre, des dommages aux dents soient minimisés.

12. Dispositif selon la revendication 1, dans lequel le tampon (15) est choisi parmi un groupe composé d'un tampon électromagnétique, d'un caoutchouc et d'un ressort.
